# EUROPÄISCHE PATENTSCHRIFT

(11) **EP 1 219 936 B1**
(45) Veröffentlichungstag und Bekanntmachung des Hinweises auf die Patenterteilung: **27.07.2005**
(21) Anmeldenummer: 01130804.6
(22) Anmeldetag: 22.12.2001
(51) Int. Cl.: G01G 15/00

(54) **Wägevorrichtung mit Freistellungseinrichtung**
Weighing device with a release mechanism
Balance avec un mécanisme de dégagement

(30) Priorität: 28.12.2000 DE 10065094
(43) Veröffentlichungstag der Anmeldung: 03.07.2002
(73) Patentinhaber: Wipotec Wiege- und Positioniersysteme GmbH, 67657 Kaiserslautern (DE)
(72) Erfinder: Düppre, Theo, Dipl.-Ing. (FH), 67663 Kaiserslautern (DE); Schulzki, Alexander, Dipl.-Ing., 67705 Stelzenberg (DE); Arnold, Kurt, Dr.-Ing., 67663 Kaiserslautern (DE)
(74) Vertreter: Eder, Christian, Dipl.-Ing.

(56) Entgegenhaltungen:
- DE-A- 19 722 091
- DE-U- 8 312 334
- FR-A- 2 603 017

## Beschreibung

Die vorliegende Erfindung betrifft eine Wägevorrichtung mit einer Freistellungseinrichtung nach dem Oberbegriff des Anspruchs 1. Derartige Vorrichtungen werden beispielsweise in Abfüllanlagen für Dosen, Tuben, Schalen o.ä. eingesetzt, und dienen der Kontrolle und Steuerung der Befüllung hinsichtlich einer vorgegebenen Menge bzw. eines Gewichts.

Aus der Praxis ist beispielsweise eine Wägevorrichtung bekannt, bei der ein in Teilschritten waagerecht rotierendes Transportelement in umlaufend angeordneten Aufnahmeöffnungen zu wiegende Behälter mit Produkt aufnimmt und wieder abgibt. Im Laufe der Rotationsschritte wird jeder Behälter in eine Wiegeposition gebracht, um durch eine dann unter dem Behälter liegende Wägezelle gewogen zu werden. Um einen Kraftnebenschluß, also das Wiegeergebnis verfälschende zusätzliche Kräfte auf die Wägezelle, zu minimieren, wird das Transportelement vor dem Wiegevorgang etwas gegen die vorherige Drehrichtung zurückgedreht, so dass die Wandung der Aufnahmeöffnungen den Behälter in seiner Wiegeposition nicht mehr berührt. Diese "Freistellung" erfordert jedoch eine sehr genaue und damit aufwendige Positionierung der Behälter. Zudem muß der jeweilige Behälter aus der Linie bewegt werden und für den Wiegevorgang zusätzlich auch von einem oder mehreren, der jeweiligen Aufnahmeöffnung gegenüberliegenden, Führungselementen "freigestellt" werden, was die sichere und einfache Positionierung des Behälters weiter erschwert.

Die DE 197 22 091 beschreibt eine Vorrichtung zum Wiegen von Verpackungsbehältern, die eine schrittweise angetriebene Fördereinrichtung sowie einen Greifer zum Halten von gewichtsbelasteten Elementen umfasst.

Ferner sind in der Praxis Befüll- und Wägevorrichtung meist eigenständige und voneinander getrennt angeordnete Einheiten. Für die Befüllung des Behälters wird dieser meist mit einer geeigneten Halterung durch die Befülleinheit geführt. Erst im Anschluß an die Befüllung wird der Behälter - oft in für den Wiegevorgang geeigneten anderen Halterungen - dann zur Wägevorrichtung transportiert, wofür eine Transportzeit verstreicht. Bis das Wiegeergebnis des Behälters über eine Steuerung zur Korrektur eines Befüllungsvorgangs herangezogen werden kann, werden üblicherweise weitere Behälter bereits befüllt. Deren Füllmenge wird also nicht korrigiert, da sie innerhalb der Transportzeit des gewogenen Behälters, die als Totzeit bezeichnet wird, befüllt werden. So stellt sich das Problem, die Zeit zwischen Befüll- und Wiegevorgang so kurz wie möglich halten, um die Zeit zwischen einer Fehlbefüllung ihrer Erkennung zu minimieren.

Ausgehend von diesem Stand der Technik liegt der Erfindung die Aufgabe zugrunde, einen Wiegevorgang so zu ermöglichen, dass ein Kraftnebenschluß während des Wiegevorgangs sicher und einfach vermieden wird, dass das Produkt kontrolliert geführt bzw. bewegt wird, so dass die Orientierung und Position nicht verloren gehen und darüber hinaus den Wiegevorgang in einen Befiillvorgang so zu integrieren, dass die vorgenannte Totzeit zur Regelung der Befüllmenge entfällt.

Die Aufgabe wird gelöst durch eine Wägevorrichtung nach Anspruch 1.

Die Erfindung nutzt für die Freistellung eines mit Produkt befüllten Behälters einerseits ein vertikal bewegliches Hubelement, welches den Behälter in eine Position bewegt, in der dieser frei auf dem Hubelement oder einem daran angeordneten Hubteller aufliegt, ohne dass eine seitliche Berührung des Behälters mit Führungsschienen oder Transporteinrichtungen besteht. Andererseits wird das so beschwerte Hubelement mittels eines Antriebes, einer Kupplung und einem Blockiermechanismus so bewegt, dass es für den Wiegevorgang frei auf der Wägezelle oder einem an dieser angebrachten Beaufschlagungselement aufliegt und keinerlei mechanischen Kontakt mit dem Antrieb oder der Kupplung aufweist, d.h. das Produkt liegt kraftnebenschlussfrei auf der Waage auf.

Der Vorteil der Wägevorrichtung nach Anspruch 1 besteht darin, dass das zu wiegende Gut schnell und einfach von Führungs- und Haltungselementen in seiner Umgebung gelöst, also freigestellt wird. Da durch die erfindungsgemäße Freistellung des Hubelementes von Antrieb bzw. Kupplung ebenfalls keine unerwünschten Kräfte in die Wägezelle eingeleitet werden können, ist ein genaues und unkompliziertes Wiegen einzelner Behälter mit zu wiegendem Gut einfach durchführbar.

Weitere Ausgestaltungen der Erfindung ergeben sich aus den abhängigen Ansprüchen.

Die Ausführung nach Anspruch 4 zeigt den Vorteil, dass der Blockiermechanismus im Fall der Gewindespindel lediglich über ein einfaches Gewinde realisiert wird, welches bspw. unmittelbar in das Beaufschlagungselement der Wägezelle oder in ein mit diesem verbundenen Gewindeelement eingebracht werden kann. Der Antrieb bewegt die Spindel durch deren Rotation, so dass über die Wahl der Rotationsgeschwindigkeit und der Steigung des Gewindes der Spindel eine sehr präzise Bewegung des Hubelementes auch über kleine Wegstrecken möglich ist.

Eine Ausführung des Hubelements als verschiebbare Stange oder Kugelumlaufspindel ist ebenfalls möglich.

Die Ausführung nach Anspruch 5 bewirkt den Vorteil, dass das Hubelement mittels einer konstruktiv sehr einfachen Kupplung von dem Antrieb mechanisch vollkommen gelöst werden kann, so dass es ausschließlich über den Blockiermechanismus und das Beaufschlagungselement getragen wird.

Die Ausführung nach Anspruch 6 zeigt den Vorteil, dass der Antrieb das Hubelement beinhalten kann, wodurch die Kupplung entfällt. Ihre Funktion wird alleine durch die gezielte Erzeugung eines elektrischen Magnetfeldes im elektromotorischen Linearantrieb realisiert, wobei das Hubelement als beweglicher Teil des Linearantriebs berührungslos innerhalb dieses Antriebs geführt werden kann.

Erfindungsgemäß werden Antrieb und Blockiermechanismus vorteilhafterweise automatisch angesteuert. Dadurch wird personeller Aufwand beim Ablauf des Wiegevorgangs verringert. Ferner kann die Steuerung von Antrieb und Blockiermechanismus in eine übergeordnete Automatisierung eingebunden werden, welche bspw. auch die Füllmenge bzw. das Gewicht des zu wiegenden Guts regelt.

Durch die erfindungsgemäße Ausführung sind in vorteilhafter Weise die einzelnen Bewegungen des Hubelements und die Blockierfunktionen des Blockiermechanismus automatisch nacheinander ausführbar. Dies ermöglicht eine exakte zeitliche Abstimmung dieser Funktionen und reduziert den Zeitaufwand pro Wiegevorgang.

Erfindungsgemäß erfolgt die Beaufschlagung des Beaufschlagungselements mit den Gewichten vorteilhafterweise nach einer vorzugebenden mathematischen Funktion. Somit kann die Bewegung des Hubelements abgebremst oder beschleunigt werden, um beispielsweise eine sanfte Belastung der Wägezelle zu bewirken. Damit werden Schwingungen des Beaufschlagungselements oder der Wägezelle minimiert.

Der Vorteil der Ausführungsformen nach Anspruch 8 oder 9 besteht in der Reduzierung des konstruktiven, apparativen und steuerungstechnischen Aufwands. Dieser ergibt sich aus der über einen einzigen Antrieb möglichen gleichzeitigen Bewegung mehrerer Hubelemente mit jeweils aufgebrachtem Gut. Dabei können die Hubelemente für den Wiegevorgang entweder gemeinsam auf dem Beaufschlagungselement einer einzigen Wägezelle oder auch auf mehreren separaten Beaufschlagungselementen mit jeweils einer zugeordneten Wägezelle aufgesetzt werden.

Um Kraftnebenschlüsse bei den Wiegevorgängen weitest möglich zu vermeiden, wird der Blockiermechanismus, der mit dem Beaufschlagungselement zumindest zeitweise kraftübertragend in Verbindung steht, über aus dem Stand der Technik bekannte Daten- und/oder Energieleitungen versorgt. Diese Leitungen erstrecken sich von den ortsfesten und nicht mit-gewogenen Komponenten bzw. deren Platinen zu den mit dem Beaufschlagungselement der Wägezelle gekoppelten oder bei einem Wiegevorgang mit-bewegten Komponenten bzw. deren Platinen. Dies gilt beispielsweise auch für Bandantriebe von Wägesystemen. Die Leitungen können dabei vorzugsweise als dünne, flexible Goldbändchen oder -litzen ausgeführt sein.

Auf diese Weise kann insbesondere die vorliegende Verbindung von der Steuereinheit zum Blockiermechanismus realisiert werden, ohne dass nennenswerte mechanische Kräfte über diese Verbindung übertragen werden und damit das Messergebnis verfälschen.

Eine bevorzugte Ausführungsform der Erfindung wird nachfolgend unter Bezugnahme auf die Figuren beschrieben, in der sie als ein Beispiel dargestellt ist und keine Einschränkung bildet. Von den Figuren zeigt:
- Fig. 1: eine schematische Darstellung einer Wägevorrichtung mit Freistelleinrichtung;
- Fig. 2: eine schematische Darstellung einer Ausführung der Kupplung;
- Fig. 3: eine schematische Darstellung einer Freistelleinrichtung für mehrere Wägezellen mit gemeinsamem Antrieb, und
- Fig. 4: eine schematische Darstellung einer weiteren Ausführungform der Kupplung.

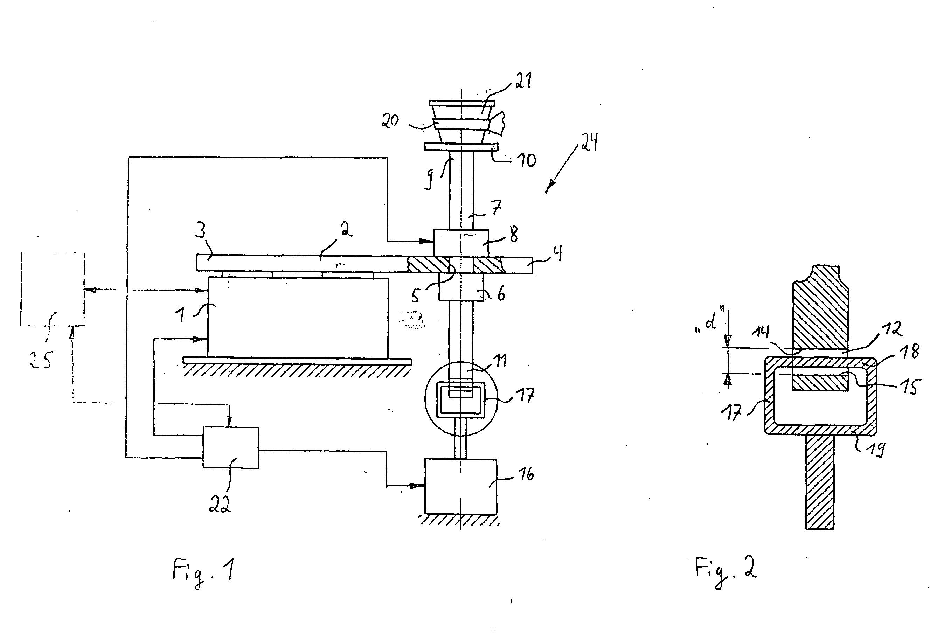

Wie in Fig. 1 dargestellt, weist die Wägevorrichtung eine horizontal angeordnete Wägezelle 1 mit einem Beaufschlagungselement 2 auf, das zur Übertragung der Gewichtskraft des zu wiegenden Guts auf die Wägezelle 1 dient.

Das horizontal ausgerichtete Beaufschlagungselement 2 ist an einem ersten Abschnitt 3 des Beaufschlagungselements 2 mit der Wägezelle 1 verbunden. Ein dem ersten Abschnitt 3 abgewandter zweiter Abschnitt 4 des Beaufschlagungselements 2 ragt in horizontaler Richtung um einen Abstand über die Wägezelle 1 hinaus. Der zweite Abschnitt 4 des Beaufschlagungselements 2 weist eine Bohrung 5 auf. Auf der der Wägezelle 1 zugewandten Seite des zweiten Abschnitts 4 ist ein konzentrisch mit der Bohrung 5 angeordnetes Linearlager 6 mit dem Beaufschlagungselement 2 verbunden.

Ein Hubelement 7 in der Form eines Rundstabes ragt in vertikaler Richtung durch die Bohrung 5 und wird durch das Linearlager 6 vertikal geführt. Durch alternative Verwendung eines Hubelements 7 mit nicht kreisförmigem Querschnitt kann das Hubelement 7 erforderlichenfals gegen Verdrehen gesichert werden.

Auf der der Wägezelle 1 abgewandten Seite des zweiten Abschnitts 4 ist an dem Hubelement 7 ein Blockiermechanismus 8 angeordnet. Die Anordnung und Abmessung des Blockiermechanismus 8 ist so gewählt, dass er auf dem Beaufschlagungselement 2 aufliegen kann.

Über eine Anzeige- und Bedieneinrichtung 25 kann die Wägezelle 1 und eine Steuereinheit 22 bedient werden. Der Blockiermechanismus 8 kann über die Steuereinheit 22 betätigt, d.h. ein- und entkoppelt werden. Die Steuereinheit 22 kann auch in die Anzeige- und Bedieneinrichtung 25 integriert sein.
Im eingekoppelten Zustand bewirkt der Blockiermechanismus 8 in axialer Richtung des Hubelements 7 mit dem Hubelement 7 eine kraftschlüssige Verbindung, so dass das Hubelement 7 in axialer Richtung nicht gegen den Blockiermechanismus 8 verschoben werden kann. Dagegen kann das Hubelement 7 im entkoppelten Zustand in seiner axialen Richtung frei entlang des Blockiermechanismus 8 verschoben werden.

Das Hubelement 7 weist an einem der Wägezelle 1 abgewandten ersten Ende 9 einen mit dem Hubelement 7 verbundenen horizontal ausgerichteten Hubteller 10 auf. Oberhalb der Hubtellers wird ein zu wiegendes Gut 21 in einer konisch geformten, in vertikaler Richtung nach oben sich erweiternden Halterung 20 bereitgestellt. Die Halterung 20 kann beispielsweise ein Element einer Fördereinrichtung sein (wie etwa eine Förderkette oder ein Becherwerk), wie sie in einer Produktionsmaschine (z.B. Abfüllmaschine) zum Einsatz kommt.

Wie am besten in Fig. 2 zu erkennen ist, weist das Hubelement 7 an einem dem ersten Ende 9 abgewandten zweiten Ende 11 eine horizontal ausgerichtete Ausnehmung 12 auf. Die Ausnehmung 12 weist eine vertikale Ausdehnung "d" auf. Die vertikale Ausdehnung "d" wird an ihrer dem ersten Ende 9 zugewandten Seite von einem oberen Anschlag 14 und an der dem oberen Anschlag 14 gegenüberliegenden Seite der Ausnehmung 12 von einem unteren Anschlag 15 begrenzt.

Ein im wesentlichen rechteckig ausgebildetes, horizontal ausgerichtetes Bügelelement 17 ist mit einem dem ersten Ende 9 zuweisenden oberen Bügelabschnitt 18 in der Ausnehmung 12 angeordnet. Die vertikale Ausdehnung des oberen Bügelabschnitts 18 ist um ein Maß geringer als die vertikale Ausdehnung 13, so dass es zwischen dem oberen und unteren Anschlag 13, 14 positioniert werden kann, ohne das Hubelement 7 zu berühren. Ein dem oberen Bügelabschnitt 18 gegenüberliegender unterer Bügelabschnitt 19 ist an einem Antrieb 16 befestigt. Der Antrieb 16 bewegt das Bügelelement 17 in vertikaler Richtung auf und ab.

Ein Wiegevorgang geht wie folgt vor sich:

Die Steuereinheit 22 entkoppelt den Blockiermechanismus 8, so dass das Hubelement 7 relativ zum Blockiermechanismus 8 in vertikaler Richtung frei gleiten kann. Über die Ansteuerung einer nicht gezeigten Vorrichtung wird das zu wiegende Gut 21 oberhalb des Hubtellers 10 bereitgestellt.
Die Steuereinheit 22 bewegt nun über den Antrieb 16 das Bügelelement 17 in vertikaler Richtung aufwärts, so dass der obere Bügelabschnitt 18 am oberen Anschlag 14 anschlägt. Das Bügelelement und damit nun das Hubelement wird über den Antrieb um ein weiteres Maß nach oben gesteuert, so dass der Hubteller 10 das zu wiegende Gut 21 aus der Halterung 20 in vertikaler Richtung heraushebt, bis es frei auf dem Hubteller 10 zu liegen kommt, ohne die Halterung 20 oder andere, hier nicht gezeigt Elemente zu berühren. Die Steuereinheit 22 hält den Antrieb 16 nun an.

Die Steuereinheit 22 betätigt jetzt den Blockiermechanismus 8, so dass der Blockiermechanismus 8 mit dem Hubelement 7 gekoppelt wird und das Hubelement 7 nicht mehr gegenüber dem Blockiermechanismus 8 verschiebbar ist.

Darauf folgend steuert die Steuereinheit 22 den Antrieb 16 mit dem Bügelelement 17 und dem Hubelement 7 abwärts, bis der mit dem Hubelement 7 verbundene Blockiermechanismus 8 auf dem Beaufschlagungselement 2 zu liegen kommt. Während der Antrieb 16 anschließend um eine weiteres Maß nach unten gesteuert wird, übernimmt das Beaufschlagungselement 2 die Last, welche durch die Gewichtskraft des Gutes 21, des Hubtellers 10 und des Hubelementes 7 besteht. Gleichzeitig wird der obere Bügelabschnitt 18 vom oberen Anschlag 14 nach unten wegbewegt, da das Hubelement 7 nun vom Beaufschlagungselement 2 getragen wird.

Hat die Steuereinheit 22 über den Antrieb 16 den oberen Bügelabschnitt 18 um ein zu bestimmendes Mindestmaß vom oberen Anschlag 14 wegbewegt, ohne dass der obere Bügelabschnitt 18 den unteren Anschlag 15 berührt, ist das Hubelement 7 vom Antrieb 16 völlig entkoppelt, so dass hier keinerlei Kraftnebenschluß erfolgen kann.

In diesem Moment löst die Steuereinheit 22 das Wiegen der aufgebrachten Last mittels Wägezelle 1 und gegebenenfalls die Auswertung und Ansteuerung der hier nicht gezeigten Abfüllvorrichtung aus.

Anschließend wird der Blockiermechanismuß 8 durch die Steuereinheit 22 entkoppelt, so dass das Hubelement 7 in vertikaler Richtung nach unter gleiten kann, bis der obere Anschlag 14 wieder auf dem oberen Bügelabschnitt zu liegen kommt. Gleichzeitig senkt sich mit dem Hubteller 10 das zu wiegende Gut 21. Erforderlichenfalls wird das Hubelement 7 mittels angesteuertem Antrieb 16 noch um ein weitere Maß abgesenkt, bis das zu wiegende Gut wieder vollständig in der Halterung 20 aufgenommen wird und der Hubteller 10 sich vom zu wiegenden Produkt um einen Abstand entfernt hat.

Mit der Bereitstellung eines neuen zu wiegenden Guts 21 kann der Wiegevorgang erneut beginnen.

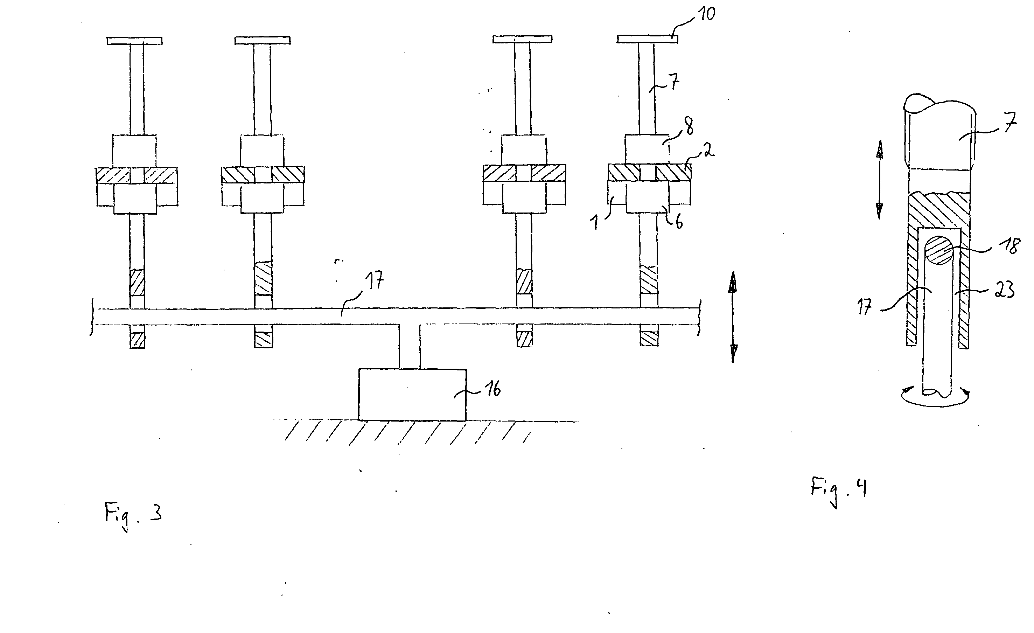

In einer weiteren, nicht dargestellten Ausführungsform kann der Blockiermechanismus 8 durch ein in das Beaufschlagungselement 2 eingebrachtes Innengewinde ersetzt werden, wenn gleichzeitig das Hubelement 7 vollständig oder teilweise mit einem entsprechenden Außengewinde versehen ist. Die Hubbewegung erfolgt in diesem Fall durch die Rotation des Hubelements 7 um seine Längsachse, wodurch es sich in axialer Richtung herauf- und herabschrauben läßt. Wie in Fig. 4 zu erkennen ist, läuft das Bügelelement 17 in diesem Fall mit einem waagerechten Spiel in einem axial zum Hubelement 7 eingebrachten Schlitz 23 und wird durch den Antrieb 16 gedreht. Die Freistellung des Hubelements 7 vom Bügelelement 17 erfolgt hier durch Ausrichtung der Achse des oberen Bügelabschnitts 18 parallel zu Wandung des Schlitzes 23.

In einer weiteren Ausführungsform wird der untere Anschlag 15 für eine erzwungene Abwärtsbewegung des Hubelements 7 genutzt, wobei das Bügelelement 17 über den Antrieb 16 so weit nach unten gesteuert wird, dass der obere Bügelabschnitt 18 auf den unteren Anschlag 15 eine zu bestimmende Kraft ausübt.

Gemäß einer weiteren Verbesserung entfällt das Bügelelement 17 und die Ausnehmung 12, so daß das Hubelement 7 mit seiner unteren Stirnseite auf einem vom Antrieb 16 auf- und abbewegten Schubelement (anstelle des Bügelelements 17) frei aufliegt. Die Abwärtsbewegung des Hubelements erfolgt dann nur auf Grund seines Eigengewichts, wenn der Antrieb das Schubelement absenkt. Somit bringt der Antrieb 16 keine Zugkraft, sondern nur eine vertikal nach oben gerichtete Schubkraft auf das Hubelement 7 auf. Dies vereinfacht die Form der Kupplung.

In einer weiteren Ausführungsform erstreckt sich das Beaufschlagungselement 2 zu mehreren Seiten über die Wägezelle 1 hinaus, und nimmt dabei mehrere Hubelemente 7 auf. Dadurch wird die Wägezelle weniger exzentrisch belastet.

## Patentansprüche

1. Wägevorrichtung, insbesondere für eine Anlage zur Abfüllung von in Transporthalterungen (20) transportierten zu wiegenden Gütern (21)
a mit einer Wägezelle (1), einer Anzeige- und Bedieneinrichtung (25) und einem Beaufschlagungselement (2), welches mit der Gewichtskraft des Guts (21) beaufschlagbar ist, und
b mit einer Freistelleinrichtung (24) zur Beaufschlagung des Beaufschlagungselements mit der Gewichtskraft des Guts (21), und
c mit einer Steuereinheit (22), die mit der Wägezelle (1), der Anzeige- und Bedieneinrichtung (25) und der Freistelleinrichtung (24) verbunden ist,
**dadurch gekennzeichnet**,
d **dass** die Freistelleinrichtung (24) einen steuerbaren Antrieb (16) für ein Hubelement (7) und einen steuerbaren Blockiermechanismus (8) aufweist, mit dem das Hubelement (7) kraftschlüssig mit dem Beaufschlagungselement (2) koppelbar ist, und
e **dass** der Antrieb (16) über eine Kupplung mit dem Hubelement (7) verbunden ist, welche eine vollständige Entkopplung des Hubelements (7) vom Antrieb (16) ermöglicht, und
f **dass** die Steuereinheit (22) zur Durchführung eines Wiegevorgangs
I) so zur Ansteuerung des Antriebs (16) ausgebildet ist, dass das Hubelement (7) die Gewichtskraft des zu wiegenden Gutes (21) vollständig aufnimmt,
II)so zur Ansteuerung des Blockiermechanismus (8) ausgebildet ist, dass das Hubelement (7) kraftschlüssig mit dem Beaufschlagungselement (2) gekoppelt ist,
III)so zur Ansteuerung des Antriebs (16) ausgebildet ist, dass mittels der Kupplung oder der Kupplungsfunktion des Antriebs (16) das Hubelement (7) vollständig vom Antrieb (16) entkoppelt wird,
IV) zur Auswertung von von der Wägezelle (1) empfangenen Signale zur Bestimmung eines Gewichts ausgebildet ist, und
V) zur Ansteuerung des Blockiermechanismus (8) in den entkoppelten Zustand ausgebildet ist.

2. Wägevorrichtung nach Anspruch 1, **dadurch gekennzeichnet, dass** die Steuereinheit (22) zur Ansteuerung des Antriebs (16) so ausgebildet ist, dass das Hubelement (7) das Gut (21) zur Vermeidung von Kraftnebenschluss aus einer Transporthalterung (20) löst.

3. Wägevorrichtung nach Anspruch 1 oder 2, **dadurch gekennzeichnet, dass** die Bewegung des Hubelements (7) eine vertikale Komponente aufweist.

4. Wägevorrichtung nach einem der vorigen Ansprüche, **dadurch gekennzeichnet, dass** das Hubelement (7) eine verschiebbare Stange, eine Gewindespindel oder eine Kugelumlaufspindel ist.

5. Wägevorrichtung nach einem der vorigen Ansprüche, **dadurch gekennzeichnet, dass** die Kupplung
a) zur kraftschlüssigen Kopplung des Antriebs (16) mit dem Hubelement (7) bei einer Bewegung des Hubelements (7) entgegen der Gewichtskraft des zu wiegenden Guts (21), und
b) durch eine entgegengesetzte Bewegung des Antriebs (16) zur vollständigen Entkopplung des Hubelements (7) vom Antrieb (16) nach einem kraftschlüssigen Koppeln des Hubelements (7) mit dem Beaufschlagungselement (2)
ausgebildet ist.

6. Wägevorrichtung nach einem der vorigen Ansprüche, **dadurch gekennzeichnet, dass** der Antrieb (16) als elektromotorischer Linearantrieb ausgebildet ist, und dass das Hubelement (7) den beweglichen Teil des Linearantriebs bildet oder mit diesem gekoppelt ist.

7. Wägevorrichtung nach einem der vorigen Ansprüche, **dadurch gekennzeichnet, dass** die Steuereinheit (22) zur Ansteuerung des Antriebs (16) zum vollständigen Entkoppeln des Hubelements (7) vom Antrieb (16) so ausgebildet ist, dass die Beaufschlagung des Beaufschlagungselements (2) mit den Gewichtskräften des Hubelements (7) mit dem zu wiegenden Gut (21) und gegebenenfalls weiteren Gewichtskräften gemäß eines frei wählbaren Belastungsverlaufs erfolgt.

8. Wägevorrichtung nach einem der vorigen Ansprüche, **dadurch gekennzeichnet, dass** der Antrieb (16) mehrere Hubelemente (7) bewegt, welche in genannter Weise mit einem gemeinsamen Beaufschlagungselement (2) für eine gemeinsame Wägezelle (1) zusammenwirken.

9. Wägevorrichtung nach einem der Ansprüche 1 bis 7, **dadurch gekennzeichnet, dass** der Antrieb (16) mehrere Hubelemente (7) bewegt, welche in genannter Weise jeweils mit einem separaten Beaufschlagungselement (2) mit einer separaten Wägezelle (1) zusammenwirken.

## Claims

1. Weighing device, in particular for a system for decanting goods (21) that have been transported in transport holders (20) and are to be weighed,
a having a weighing cell (1), an indicating and operating mechanism (25) and a loading element (2) which can be loaded with the weight of the good (21), and
b having a release mechanism (24) for loading the loading element with the weight of the good (21), and
c having a control unit (22) which is connected to the weighing cell (1), the indicating and operating mechanism (25) and the release mechanism (24),
**characterised**
d **in that** the release mechanism (24) has a controllable drive (16) for a lifting element (7) and a controllable blocking mechanism (8) with which the lifting element (7) can be coupled in a force-locking manner with the loading element (2), and
e **in that** the drive (16) is connected to the lifting element (7) by way of a coupling that enables complete decoupling of the lifting element (7) from the drive (16), and
f **in that** the control unit (22) for carrying out a weighing process
I) is formed to activate the drive (16) in such a way that the lifting element (7) completely takes up the weight of the good (21) that is to be weighed,
II) is formed to activate the blocking mechanism (8) in such a way that the lifting element (7) is coupled in a force-locking manner with the loading element (2),
III) is formed to activate the drive (16) in such a way that the lifting element (7) is completely decoupled from the drive (16) by means of the coupling or the coupling function of the drive (16),
IV) is formed to evaluate signals received by the weighing cell (1) in order to determine a weight, and
V) is formed to activate the blocking mechanism (8) and move it into the decoupled state.

2. Weighing device according to claim 1, **characterised in that** the control unit (22) is formed to activate the drive (16) in such a way that the lifting element (7) frees the good (21) from a transport holder (20) in order to avoid force-shunting.

3. Weighing device according to claim 1 or 2, **characterised in that** the movement of the lifting element (7) has a vertical component.

4. Weighing device according to one of the previous claims, **characterised in that** the lifting element (7) is a displaceable rod, a threaded spindle or a recirculating ball screw.

5. Weighing device according to one of the previous claims, **characterised in that** the coupling is formed
a) to couple the drive (16) to the lifting element (7) in a force-locking manner in the event of a movement of the lifting element (7) in opposition to the weight of the good (21) to be weighed, and
b) as a result of an opposite movement of the drive (16) to decouple the lifting element (7) completely from the drive (16) after the lifting element (7) has been coupled in a force-locking manner with the loading element (2).

6. Weighing device according to one of the previous claims, **characterised in that** the drive (16) is formed as an electromotive linear drive, and **in that** the lifting element (7) forms the movable portion of the linear drive or is coupled to the latter.

7. Weighing device according to one of the previous claims, **characterised in that** the control unit (22) is formed to activate the drive (16) in order to decouple the lifting element (7) completely from the drive (16) in such a way that the loading of the loading element (2) with the weight of the lifting element (7) with the good (21) that is to be weighed and, if applicable, further weights is effected in accordance with a freely selectable load characteristic.

8. Weighing device according to one of the previous claims, **characterised in that** the drive (16) moves a plurality of lifting elements (7) that cooperate in the manner mentioned with a common loading element (2) for a common weighing cell (1).

9. Weighing device according to one of claims 1 to 7, **characterised in that** the drive (16) moves a plurality of lifting elements (7) that cooperate in the manner mentioned in each case with a separate loading element (2) with a separate weighing cell (1).

## Revendications

1. Dispositif de pesée, notamment pour une installation de remplissage avec des articles à peser (21), transportés dans des conteneurs de transport (20), comportant
a. une cellule de pesée (1), un dispositif d'affichage et de commande (25) et un élément de chargement (2), qui peut être chargé par la force correspondant au poids de l'article (21), et
b. un dispositif de libération (24) pour charger l'élément de chargement avec la force correspondant au poids de l'article (21), et
c. une unité de commande (22), qui est reliée à la cellule de pesée (1), au dispositif d'affichage et de commande (25) et au dispositif de libération (24),
**caractérisé en ce**
d. **que** le dispositif de libération (24) comporte un dispositif d'entraînement commandable (16) pour un élément de levage (7) et un mécanisme de blocage commandable (8), avec lequel l'élément de levage (7) peut être couplé selon une liaison de force à l'élément de chargement (2), et
e. **que** le dispositif d'entraînement (16) est relié à l'élément de levage (7) par l'intermédiaire d'un accouplement, qui permet un désaccouplement complet de l'élément de levage (7) par rapport au dispositif d'entraînement (16), et
f. **que** l'unité de commande (22) pour l'exécution de l'opération de pesée
I) est conçue pour la commande du dispositif d'entraînement (16) de telle sorte que l'élément de levage (7) absorbe complètement la force correspondant au poids de l'article à peser (21),
II) est conçue pour la commande du mécanisme de blocage (8) de telle sorte que l'élément de levage (7) est couplé selon une liaison de force à l'élément de chargement (2),
III) est conçue pour la commande du dispositif d'entraînement (16) de telle sorte que l'élément de levage (7) est complètement découplé du dispositif d'entraînement (16) au moyen de l'accouplement ou de la fonction d'accouplement du dispositif d'entraînement (16),
IV) est conçue pour l'évaluation de signaux, qui sont reçus de la cellule de pesée (1), pour la détermination d'un poids, et
V) est conçue pour la commande du mécanisme de blocage (8) dans l'état découplé.

2. Dispositif de pesée selon la revendication 1, **caractérisé en ce que** l'unité de commande (22) pour la commande du dispositif d'entraînement (16) est agencée de telle sorte que l'élément de levage (7) détache l'article (21) d'un conteneur de transport (20) pour éviter une dérivation de la force.

3. Dispositif de pesée selon la revendication 1 ou 2, **caractérisé en ce que** le déplacement de l'élément de levage (7) possède une composante verticale.

4. Dispositif de pesée selon l'une des revendications précédentes, **caractérisé en ce que** l'élément de levage (7) est une barre déplaçable, une broche filetée ou une broche à circulation de billes.

5. Dispositif de pesée selon l'une des revendications précédentes, **caractérisé en ce que** l'accouplement est agencé
a) pour l'accouplement, selon une liaison de force, du dispositif d'entraînement (16) à l'élément de levage (7) lors d'un déplacement de l'élément de levage (7) à l'encontre de la force correspondant au poids de l'article à peser (21), et
b) par un déplacement opposé du dispositif d'entraînement (16), pour le découplage complet de l'élément de levage (7) par rapport au dispositif d'entraînement (16) après un accouplement, selon une liaison de force, de l'élément de levage (7) à l'élément de charge (2).

6. Dispositif de pesée selon l'une des revendications précédentes, **caractérisé en ce que** le dispositif d'entraînement (16) est agencé sous la forme d'un dispositif d'entraînement linaire à moteur électrique et que l'élément de levage (7) forme la partie mobile du dispositif d'entraînement linéaire ou est couplé à cette dernière.

7. Dispositif de pesée selon l'une des revendications précédentes, **caractérisé en ce que** l'unité de commande (22) pour la commande du dispositif d'entraînement (16) est conçue pour le découplage complet de l'élément de levage (7) par rapport au dispositif d'entraînement (16), que le chargement de l'élément de chargement (2) avec les forces correspondant au poids de l'élément de levage (7) s'effectue avec l'article à peser (21) et avec éventuellement d'autres forces liées au poids conformément à un processus de chargement pouvant être librement choisi.

8. Dispositif de pesée selon l'une des revendications précédentes, **caractérisé en ce que** le dispositif d'entraînement (16) déplace plusieurs éléments de levage (7), qui coopèrent d'une manière connue avec un élément de chargement commun (2) pour une cellule de pesée commune (1).

9. Dispositif de pesée selon l'une des revendications 1 à 7, **caractérisé en ce que** le dispositif d'entraînement (16) déplace plusieurs éléments de levage (7), qui coopèrent de la manière indiquée respectivement avec un élément de chargement respectif séparé (2) avec une cellule de pesée séparée (1).
